Europäisches Patentamt

(19) European Patent Office

Office européen des brevets

(11) Publication number: **0 212 381**
**B1**

# EUROPEAN PATENT SPECIFICATION

(45) Date of publication of the patent specification: 18.07.90

(21) Application number: **86110592.2**

(22) Date of filing: **31.07.86**

(51) Int. Cl.⁵: **F16D 43/20, B23B 45/00**

(54) Slip clutch with adjustable threshold torque.

(30) Priority: **10.08.85 DE 3528757**

(43) Date of publication of application:
**04.03.87 Bulletin 87/10**

(45) Publication of the grant of the patent:
**18.07.90 Bulletin 90/29**

(84) Designated Contracting States:
**DE FR GB IT**

(56) References cited:
**EP-A- 0 017 288**
**DE-A- 3 234 571**
**FR-A- 355 809**
**US-A- 1 541 489**
**US-A- 2 773 370**
**US-A- 2 826 903**

(73) Proprietor: **Black & Decker Inc., Drummond Plaza Office Park 1423 Kirkwood Highway, Newark Delaware 19711(US)**

(72) Inventor: **Dohse, Hans-Peter, Lahnstrasse 9, D-6257 Hünfelden-Dauborn(DE)**

(74) Representative: **UEXKÜLL & STOLBERG Patentanwälte, Beselerstrasse 4, D-2000 Hamburg 52(DE)**

ACTORUM AG

## Description

The invention relates to a slip clutch with adjustable threshold torque, wherein two elements which are movable in relation to each other in engagement by spring pressure variable for adjusting the threshold torque by means of an adjustment ring rotatable about the axis of rotation of said elements which elements are in engagement with a coupling element connecting said elements in a non-rotatable manner which coupling element is movable out of engagement with one of said elements in radial direction in relation to the axis of rotation and against said spring pressure upon reaching said threshold torque.

In a known slip clutch of this type (US-A-2 773 370) the coupling elements in the form of balls, which are inserted in through-bores of a bush-like portion of a shaft, are forced by springs into engagement with depressions in the first shaft to be coupled with a second shaft. The springs constructed in leaf-like manner are engaged by their free ends with the coupling elements. They extend parallel to the axes of the shafts and their other ends are screwed to one shaft. In the vicinity of the screw connection with one shaft an adjustment ring in the form of a nut is screwed on to the latter with its inner bore region closer to the coupling elements in engagement with the springs sloping outwards in this region. By varying the axial position of the adjustment ring, the pressure exerted on the coupling elements can be modified and therefore the threshold torque of the slip clutch adjusted.

However, the known slip clutch requires a relatively large overall length, because not only must there be adequate space for the adjustment ring, including its travel, but also an axial spacing between the coupling elements and the ring permitting the adjustment of the spring pressure. In the known spring clutch, the position of the engagement region of the springs with the coupling elements is axially modified on adjusting the threshold torque, so that the adjustment is only possible in a relatively small range.

In another known spring clutch (German-A-554 046) the coupling element comprises a bolt, which is radially displaceably secured against spring pressure in one clutch half and which is in engagement with a notch in the other clutch half. The bolt is inserted in a radial bore of one clutch half and between it and the outer end of the radial bore is provided a compression spring, which is supported on a screw screwed into the bore. By screwing the screw to a greater or lesser extent into the bore, it is consequently possible to adjust the threshold of the slip clutch.

In this known slip clutch, it is particularly difficult to adjust the threshold torque if several coupling elements are required for the transfer of a relatively large torque from one clutch half to the other, because then it is necessary to adjust each of the coupling elements independently of the others to the desired threshold torque, which is very difficult and time-consuming. In addition, a separate tool is required for the adjustment, namely a screwdriver.

The object of the present invention is to provide a slip clutch which, in the case of a smaller overall length, permits a simple adjustment of the threshold torque without using additional tools.

According to the invention this object is achieved in a slip clutch of the above-mentioned type in that said adjustment ring encloses said elements in the area of said coupling element and is provided with at least one inner cam surface extending in circumferential direction and being in engagement with the spring generating said spring pressure for said coupling element, the radial distance of said cam surface from said axis of rotation changes in circumferential direction.

Thus, the slip clutch according to the invention has an adjustment ring rotatable without any additional tool and whose at least one cam surface is in engagement with the spring for the coupling element, so that by turning the adjustment ring an area of the cam surface with the desired radial spacing from the axis of rotation of the slip clutch comes into engagement with the spring and therefore produces a spring pressure determining the particular threshold torque. As the adjustment ring, with the aid of which the threshold torque is adjusted, is only located in the vicinity of the at least one coupling element, no additional axial overall length of the overload coupling is required for this adjustment means.

It is already known (EP-A-0 017 288) in connection with a slip clutch to adjust the threshold torque by turning an adjustment ring, which has cam surfaces and whose spacing from the rotation axis varies circumferentially. However, in this known slip clutch there is no coupling element under spring pressure, which couples together the two parts of the slip clutch. Instead the actual spring forms the coupling element and is constructed as an axially positioned helical spring. One end of the helical spring is fixed to one part of the slip clutch and its turns are in frictional engagement with the other part of the clutch. By modifying the diameter of the helical spring by means of the cam surfaces of the adjustment ring, it is possible to adjust the threshold torque.

Quite apart from the fact that the prior slip clutch has a relatively large axial overall length, because the helical spring must engage on the other part of the clutch over a relatively long axial length, and the adjustment possibility of the threshold torque is relatively imprecise, but in addition on exceeding the threshold torque a considerable heat evolution occurs, because the other part of the clutch rotates relative to the entire axial extension of the helical spring, whilst overcoming the frictional forces.

According to a preferred development of the invention, the slip clutch has two oppositely arranged coupling elements, each of which is in engagement with a spring.

This makes it possible to increase the torque to be transferred with the slip clutch, without leading to difficulties in adjusting the threshold torque, because the adjustment ring can be provided with correspondingly adapted cam surfaces, which act with the in each case identical areas on the springs of the facing coupling elements.

A particularly favorable construction of the slip clutch is obtained if the spring is a leaf spring, whose central area engages with the associated coupling element and whose free ends are bent, the transition areas to the bent free ends of the spring engaging with in each case one cam surface of the adjustment ring.

In the case of a slip clutch constructed in this way, the curvature of the leaf spring or springs is so modified by rotating the adjustment ring from the cam surfaces thereof that the spring pressure acting on the coupling elements changes and consequently the threshold torque is adjusted.

Particularly when using a leaf spring or springs, the coupling elements can be cylinder elements having a relatively large axial extension and on releasing the slip clutch roll under line contact over the element to be moved, so that there is a considerable reduction in the risk of the coupling elements becoming overheated.

It is also known (DE-A-32 34 571) to incorporate a slip clutch into an electric power tool. In such tool the slip clutch comprises a coil spring which urges coupling balls against a gear to effect driving of a planet gear. The force of the coil spring can be adjusted by means of a rotatable adjustment ring which is in engagement with one end of the coil spring and which by changing its position changes the axial length of the coil spring. Such prior arrangement requires a considerable axial length of the power tool.

The invention also relates to an electric power tool having a housing for an electric motor and a gear arrangement coupled with the armature shaft of said electric motor, wherein said gear arrangement is coupled with a tool holder and comprises a slip clutch having two elements movable in relation to each other and coupled through a coupling element being under spring pressure and wherein one of said elements is a hollow gear of a planet gear the planet pinion of said planet gear is driven by said electric motor and located eccentrically on a driving element for the tool holder. This electric power tool is characterized in that the other element is a part of said housing, that said coupling element is in engagement with both elements which coupling element is coming out of engagement with one of said elements by movement in radial direction in relation to the axis of rotation and against said spring pressure upon reaching a threshold torque and that said hollow gear and the housing element coupled therewith are enclosed by an adjustment ring rotatable about the middle axis of said hollow gear which adjustment ring comprises at least one inner cam surface extending in circumferential direction which cam surface is in engagement with the spring generating the spring pressure for engagement of said coupling element wherein the radial distance of said cam surface from said axis of rotation varies in circumferential direction.

Thus, in the case of the electric power tool according to the invention, the slip clutch couples a casing part with the hollow gear of a planet gear, so that the complete slip clutch is stationary when the electric power tool is operating normally and therefore, unlike what normally takes place in clutches, does not rotate with a rotating shaft arrangement. In fact, only the planet pinion of the planet gear rotates and in this way drives the drive part for the tool holder. If the resistance on the tool holder increases, then the force exerted by the planet pinion on the hollow gear due the the torque about its central axis is increased, so that on reaching the threshold torque, the coupling element is disengaged from the hollow gear and the latter starts to rotate, whilst the planet pinion substantially remains in its position.

Due to the fact that in normal operation the slip clutch remains stationary, the masses moved in normal operation are reduced, so that a more favorable operating behavior is achieved.

The invention is described in greater detail hereinafter relative to non-limitative embodiments and the attached drawings, wherein show:

Fig. 1 A side view of an electric power tool in the form of an electric screwdriver.

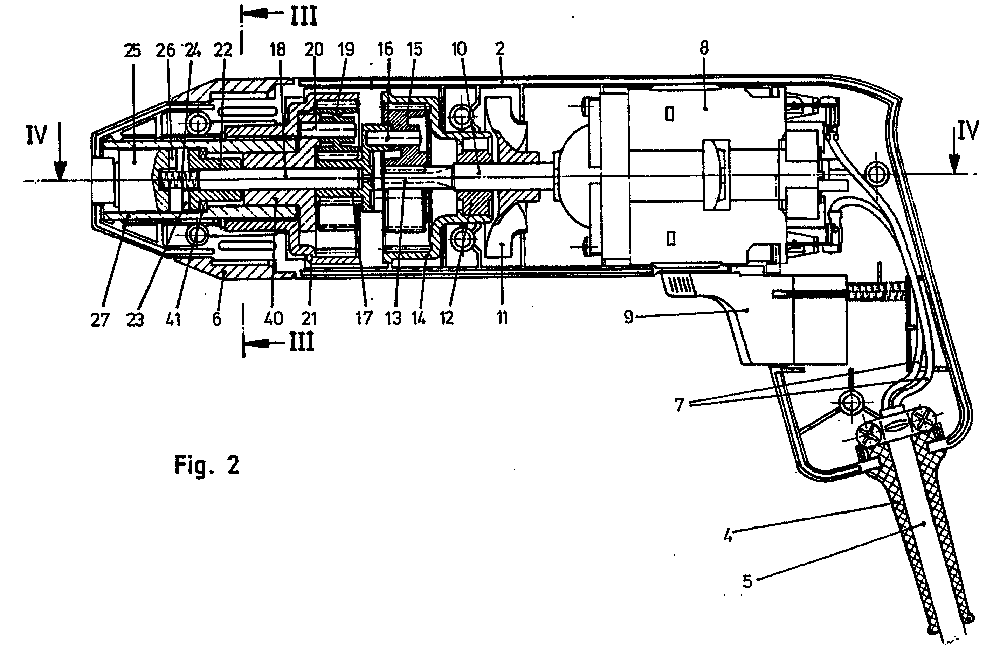

Fig. 2 A section through the screwdriver of Fig. 1, some parts being shown in elevation.

Fig. 3 In a section along line III-III, a number of operating states of the slip clutch used in the electric screwdriver.

Fig. 4 The screwdriver according to Figs. 1 to 3 partly in section along line IV-IV of Fig. 2 and partly in elevation.

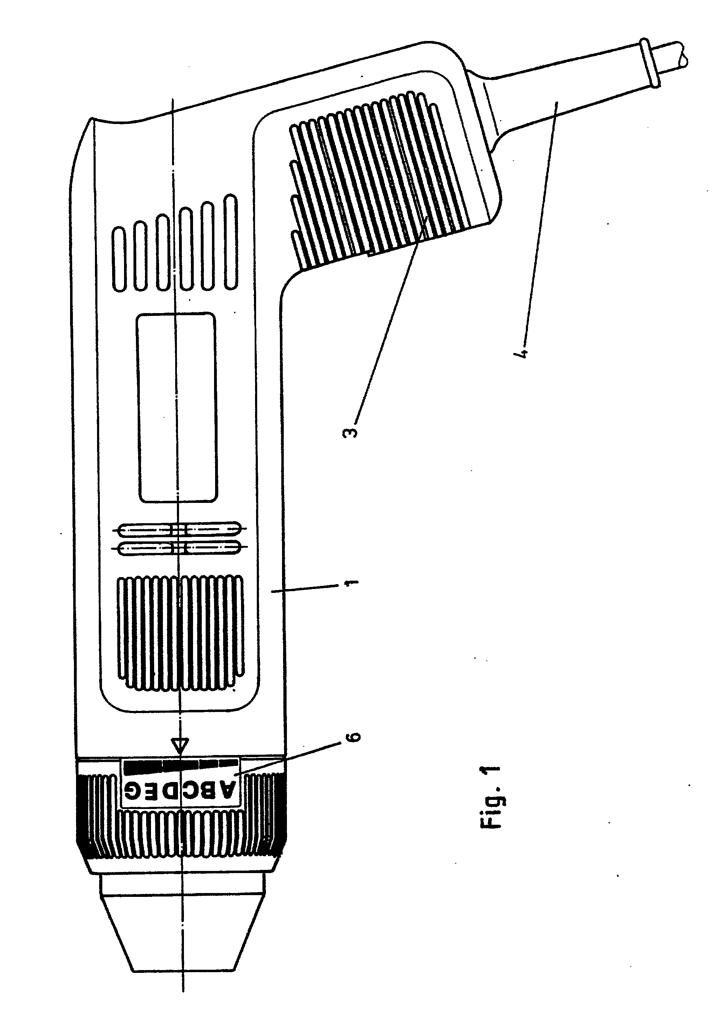

The represented electric screwdriver has a casing 1, which normally comprises two half-shells with a pistol grip 3. A power cord 5 fixed to the lower end of the pistol grip 3 with the aid of an anti-kink sleeve 4 and the lines 7 of said cord are connected to a diagrammatically represented motor unit 8 mounted within casing 1. The pistol grip 3 contains a conventional switch 9, not shown in Fig. 1, which is used in conventional manner for switching on and off the screwdriver, as well as optionally for controlling the speed of the latter.

The armature shaft 10 of the electric motor 8, which is not shown in detail, carries a conventional fan 11 and is held in a sleeve bearing 12. At the outer end of armature shaft 10 is formed a pinion 13, with which meshes a planet gear 15 fixed in rotary manner on shaft 16. Planet gear 15 also meshes with a stationary hollow gear 14, which is positioned coaxially to armature shaft 10. Shaft 16 carrying planet gear 15 and arranged eccentrically and parallel to armature shaft 10 is fixed in a gear body 17, whose gear ring is positioned coaxially to armature shaft 10 and forms the sun wheel of a further planet gear. This sun wheel 17 is fixed in rotary manner to a shaft 18 and meshes with a planet pinion 19, which is mounted in rotary manner on a shaft 20 extending in parallel to the shaft 18. The planet pinion 19 meshes with a hollow gear 21 to be described hereinafter.

Shaft 18 carries in non-rotary manner a drive part 40, in which the shaft 20 is eccentrically fixed. A sleeve part 22 is fixed in non-rotary manner to the front end of shaft 18 and has at its front end coupling teeth 23. A compression spring 24 is supported on the front end of shaft 18 and its other end engages on a tool holder 25, which carries at its rear end coupling teeth 26 which, on moving the tool holder 25 against the pressure of spring 24 engage with the coupling teeth 23 of sleeve part 22. Drive part 40, sleeve part 22 and tool holder 25 are mounted in rotary manner in a support tube 27, which is held in the casing.

Between a ring shoulder of the sleeve part 22 and a step in support tube 27 is provided a gasket 41, which prevents dirt particles and contaminants from penetrating the gear.

If the electric motor is switched on through operating switch 9, its armature shaft 10 rotates and consequently drives the planet gear 15, which meshes with pinion 13 of armature shaft 10. As the hollow gear 14, with which the planet gear 15 also meshes is held in non-rotary manner in position, the planet gear 15 takes a circular path about the longitudinal axis of armature shaft 10 which is dependent on the distance between the latter and the longitudinal axis of shaft 16 and in this way drives the sun wheel 17 of the following planet gear. The latter rotates about shaft 18 and meshes with planet pinion 19. As in this state the hollow gear 21 is kept in its stationary position, the planet pinion 19 rotates about the longitudinal axis of shaft 18 and consequently via shaft 20 rotates the drive part 40, which is positioned in non-rotary manner on shaft 18, so that the latter also rotates. Therefore, the sleeve part 22 fixed to shaft 18 rotates with it.

If in this operation stated the tool holder 25 is e.g. placed on the head of a hexagon head screw and is moved axially against the pressure of spring 24 through a corresponding pressure being exerted, then the coupling teeth 23, 26 engage with one another and the tool holder 25 rotates with shaft 18. It is possible by a standard reversal of the motor rotation direction to both screw down and unscrew.

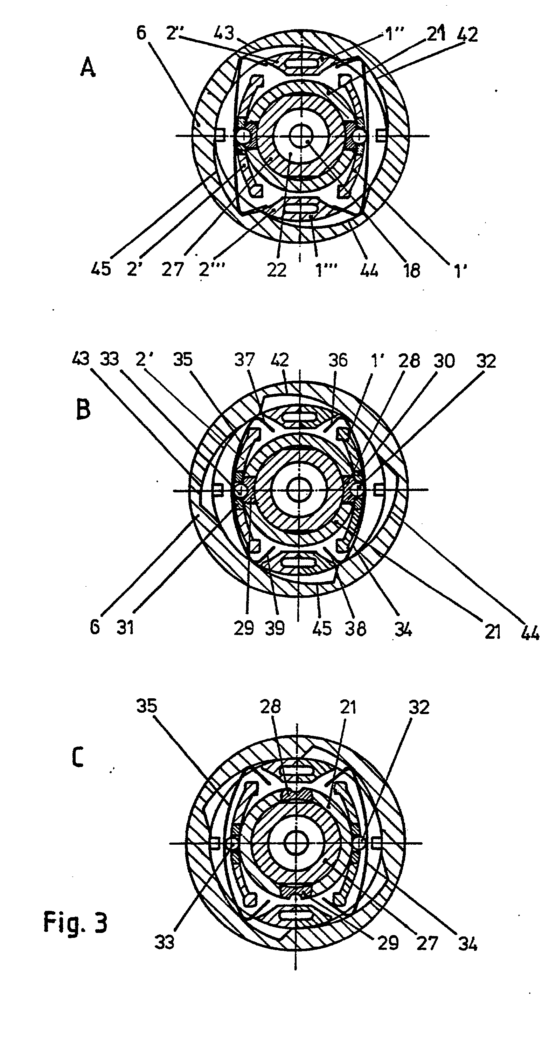

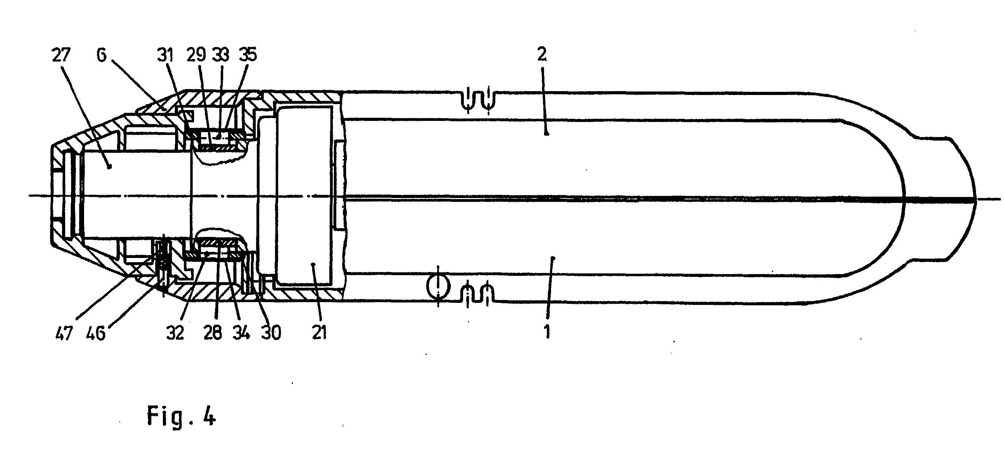

To prevent the motor from becoming overloaded and/or the gear from becoming damaged in case of a blocked tool holder 25 and in order to obtain an adjustable screwing-in torque, a slip clutch is provided. For this purpose, in the circumference of the front cylindrical portion of hollow gear 21 are placed holder or mounting inserts 28, 29 made from relatively high strength material (Figs. 3 and 4), which diagonally face one another and are provided in their outer faces with axially directed depressions. In normal operation (Figs. 3A and 3B), cylinder elements 32, 33 serving as coupling elements are located in such depressions and are held in openings in metal inserts 30, 31, which are located in casing parts 1′ and 2′ (Fig. 3) of casing halves 1 and 2. Curved leaf springs 34, 35 engage on the outsides of these casings 1′, 2′ and their free ends 36, 38 or 37, 39 are bent over inwards. The transition regions of leaf springs 34, 35 towards the free ends 36, 38 and 37, 39 thereof are supported on the cam surfaces 42, 44 and 43, 45 of an adjustment ring 6, so that the curved leaf springs 34, 35 press the cylinder elements 32, 33 into engagement with depressions in the holder inserts 28, 29 and in this way couple the hollow gear 21 with casing parts 1′ and 2′, so that rotation of hollow gear 21 is prevented, i.e. the aforementioned operating state is obtained.

Adjustment ring 6 is mounted on steps of casing halves 1, 2 and connected by means of a pin 46 (Fig. 4) to the casing half 1 so as to prevent axial movement. Pin 46 extends in a slot extending circumferentially of casing half 1 and is supported with respect to its slot base by a compression spring 47, which presses the outer end of pin 46 into a bore in adjustment ring 6 and maintains it in engagement there on a ring shoulder. In this way pin 46 prevents an axial displacement of the adjustment ring, but permits the limited rotation thereof in the circumferential direction corresponding to the circumferential extension of the slot, the degree of rotatability being indicated in Fig. 1 by the area on the adjustment ring carrying the letters.

On the inside, adjustment ring 6, as stated, carries cam surfaces 42, 44, 43, 45, which are all identically constructed and whose radial spacing continuously changes from the central axis of shaft 18. If the cam surface 42 in Fig. 3A is observed, it can be seen that at its end at the top of the drawing where engagement takes place between the transition region between leaf spring 34 and its free end 36, it has the greatest radial distance from the central axis of shaft 18, whilst the smallest radial distance occurs at the lower end of cam surface 42, i.e. where in Fig. 3B the transition region of leaf spring 34 to its free end 36 engages on cam surface 42.

In the position according to Fig. 3A, where the transition regions of leaf springs 34, 35 to their free ends 36, 38 and 37, 39 are in contact with the region of cam surface 42, 44 and 43, 45 having the greatest radial spacing from the central axis of shaft 18, leaf springs 34, 35 are least curved, i.e. they only exert a relatively small pressure on cylinder elements 32, 33 in the direction of engagement with the depressions in the holder inserts 28, 29. However, in the rotated position of adjustment ring 6 according to Fig. 3B, due to the engagement with the areas of cam surfaces 42, 44, 43, 45 having the minimum radial spacing from the central axis of shaft 18, leaf springs 34, 35 are curved to the greatest possible extent, so that the maximum pressure is exerted on cylinder elements 32, 33, so as to maintain same in engagement with the depressions in the holder inserts 28, 29.

Thus, through a corresponding position of adjustment ring 6, the pressure of springs 34, 35 on cylinder elements 32, 33 can be continuously varied between two limits and in this way the threshold torque of the slip clutch can be adjusted to the desired value.

On exceeding the adjusted threshold torque in operation, i.e. the force to be applied on shaft 20 for rotating the drive part 40 exceeds the force action holding cylinder elements 32, 33 in engagement with the depressions in holder inserts 28, 29, then the rotation of planet pinion 19 about shaft 20 leads to the cylinder elements 32, 33 being forced radially outwards counter to the pressure of springs 34, 35 and out of engagement with the depressions in the holder inserts 28, 29 (Fig. 3C). Due to the rotation of the planet pinion 19 about the now stationary shaft 20, in this position of the cylinder elements 32, 33 the hollow gear 21 is rotated, so that shaft 18 and therefore also the tool holder 25 stops and the motor now drives the hollow gear 21.

If the tool holder 25 is released, due to the frictional forces occuring there is a further rotation of hollow gear 21 and also a rotation of drive part 40, because the planet pinion 19 continues to move about the central axis of shaft 18. If, during this operation, cylinder elements 32, 33 are again aligned with the depressions in the holder inserts 28, 29, they are pressed by springs 34, 35 into said depressions (Figs. 3A and 3B) and the hollow gear 21 is again held in the stationary position, so that the complete motive energy of the motor is transferred to shaft 18.

## Claims

1. Slip clutch with adjustable threshold torque wherein two elements (1', 2'; 21) which are movable in relation to each other are in engagement by spring pressure variable for adjusting the threshold torque by means of an adjustment ring (6) rotatable about the axis of rotation of said elements (1', 2'; 21) which elements (1', 2'; 21) are in engagement with a coupling element (32, 33) connecting said elements in a non-rotatable manner which coupling element is movable out of engagement with one (21) of said elements in radial direction in relation to said axis of rotation and against said spring pressure upon reaching said threshold torque, characterized in that said adjustment ring (6) encloses said elements (1', 2'; 21) in the area of said coupling element (32, 33) and is provided with at least one inner cam surface (42, 43, 44, 45) extending in circumferential direction and being in engagement with the spring (34, 35) generating said spring pressure for said coupling element (32, 33), the radial distance of said cam surface from said axis of rotation changes in circumferential direction.

2. Slip clutch according to Claim 1, characterized in that two oppositely arranged coupling elements (32; 33) are provided each being in engagement with one spring (34; 35).

3. Slip clutch according to Claim 1 or 2, characterized in that the spring (34; 35) is a leaf spring having its central area in engagement with the corresponding coupling element (32; 33) and having bent ends (36, 38; 37, 39) and that each transition area to the bent ends (36, 38; 37, 39) of the springs (34; 35) is in engagement with a cam surface (42, 44; 43; 45) of said adjustment ring (6).

4. Electric power tool having a housing (1, 2) for an electric motor and a gear arrangement coupled with the armature shaft (10) of said electric motor, wherein said gear arrangement is coupled with a tool holder (25) and comprises a slip clutch having two elements (1', 2'; 21) movable in relation to each other and coupled through a coupling element (32, 33) being under spring pressure and wherein one of said elements is a hollow gear (21) of a planet gear the planet pinion (19) of said planet gear is driven by said electric motor and located eccentrically on a driving element (40) for the tool holder (25), characterized in that the other element is a part (1', 2') of said housing, that said coupling element (32, 33) is in engagement with both elements (1', 2'; 21) which coupling element is coming out of engagement with one (21) of said elements by movement in radial direction in relation to the axis of rotation and against said spring pressure upon reaching a threshold torque, and that said hollow gear (21) and the housing element (1', 2') coupled therewith are enclosed by an adjustment ring (6) rotatable about the middle axis of said hollow gear (21) which adjustment ring (6) comprises at least one inner cam surface (42, 43, 44, 45) extending in circumferential direction which cam surface is in engagement with the spring (34, 35) generating the spring pressure for engagement of said coupling element (32, 33) wherein the radial distance of said cam surface from said axis of rotation varies in circumferential direction.

5. Electric power tool according to Claim 4, characterized in that two oppositely arranged coupling elements (32; 33) are provided each in engagement with a spring (34; 35).

6. Electric power tool according to one of Claims 4 to 5, characterized in that said spring is a leaf spring (34; 35) having its central area in engagement with the corresponding coupling element (32; 33) and having bent ends (36, 38; 37, 39) and that each transition area to the bent ends (36, 38; 37, 39) of the spring (34; 35) is in engagement with a cam surface (42, 44; 43, 45) of said adjustment ring (6).

7. Electric power tool according to Claim 6, characterized in that said leaf spring (34; 35) abuts said housing element (1'; 2') in the areas adjacent to the engagement area with said coupling element (32; 33) when the slip clutch is in its operational position.

## Patentansprüche

1. Rutschkupplung mit einstellbarem Ansprechdrehmoment, bei der zwei Elemente (1', 2'; 21), die relativ zueinander bewegbar sind, durch Federdruck in Eingriff stehen, der zur Einstellung des Ansprechdrehmomentes mittels eines um die Drehachse der Elemente (1', 2'; 21) drehbaren Einstellringes (6) veränderbar ist, wobei die Elemente (1', 2'; 21) mit einem Kopplungselement (32, 33) in Eingriff stehen, das die Elemente unverdrehbar koppelt, wobei das Kopplungselement bei Erreichen des Ansprechdrehmomentes in radialer Richtung bezüglich der Drehachse und gegen den Federdruck außer Eingriff mit einem (21) der Elemente bewegbar ist, dadurch gekennzeichnet, daß der Einstellring (6) die Elemente (1', 2'; 21) im Bereich des Kopplungselementes (32) umgibt und mit mindestens einer inneren Nockenfläche (42, 43, 44, 45) versehen ist, die sich in Umfangsrichtung erstreckt und in Eingriff mit der Feder (34, 35) steht, die den Federdruck für das Kopplungselement (32, 33) erzeugt, wobei der radiale Abstand der Nockenfläche von der Drehachse sich in Umfangsrichtung ändert.

2. Rutschkupplung nach Anspruch 1, dadurch gekennzeichnet, daß zwei einander gegenüber angeordnete Kopplungselemente (32; 33) vorgesehen sind, von denen jedes in Eingriff mit einer Feder (34; 35) steht.

3. Rutschkupplung nach Anspruch 1 oder 2, dadurch gekennzeichnet, daß die Feder (34; 35) eine Blattfeder ist, deren Mittelbereich in Eingriff mit dem entsprechenden Kopplungselement (32; 33) steht und die abgeknickte Enden (36, 38; 37, 39) hat, und daß jeder Übergangsbereich zu den abgeknickten Enden (36, 38; 37, 39) der Federn (34; 35) in Eingriff mit einer Nockenfläche (42, 44; 43; 45) des Einstellringes (6) steht.

4. Elektrowerkzeug mit einem Gehäuse (1, 2) für einen Elektromotor und einer Kupplungsanordnung, die mit der Ankerwelle (10) des Elektromotors gekoppelt ist, wobei die Kupplungsanordnung mit einem Werkzeughalter (25) gekoppelt ist und eine Rutschkupplung aufweist, die zwei relativ zueinander bewegbare und über ein unter Federdruck stehendes Kopplungselement (32, 33) gekoppelte Elemente (1', 2'; 21) aufweist, und wobei eines der Elemente ein Hohlrad (21) eines Planetengetriebes ist, dessen Planetenrad (19) vom Elektromotor angetrieben wird und exzentrisch an einem Antriebselement (40) für den Werkzeughalter (25) sitzt, dadurch gekennzeichnet, daß das andere Element ein Teil (1', 2') des Gehäuses ist, daß das Kopplungselement (32, 33) mit beiden Elementen (1', 2'; 21) in Eingriff steht und bei Erreichen eines Ansprechdrehmomentes durch Bewegung in radialer Richtung relativ zur Drehachse und gegen den Federdruck außer Eingriff mit einem (21) der Elemente kommt, und daß das Hohlrad (21) und das mit ihm gekoppelte Gehäuseelement (1', 2') von einem um die Mittelachse des Hohlrades (21) drehbaren Einstellring (6) umgeben sind, der mindestens eine sich in Umfangsrichtung erstreckende innere Nockenfläche (42, 43, 44, 45) aufweist, die in Eingriff mit der den Federdruck für den Eingriff des Kopplungselementes (32, 33) erzeugenden Feder (34, 35) steht, wobei der radiale Abstand der Nockenfläche von der Drehachse sich in Umfangsrichtung ändert.

5. Elektrowerkzeug nach Anspruch 4, dadurch gekennzeichnet, daß zwei einander gegenüberliegende Kopplungselemente (32; 33) vorgesehen sind, von denen jedes in Eingriff mit einer Feder (34; 35) steht.

6. Elektrowerkzeug nach einem der Ansprüche 4 bis 5, dadurch gekennzeichnet, daß die Feder eine Blattfeder (34; 35) ist, deren Mittelbereich in Eingriff mit dem entsprechenden Kopplungselement (32; 33) steht und abgeknickte Enden (36, 38; 37, 39) hat, und daß jeder Übergangsbereich zu den abgeknickten Enden (36, 38; 37, 39) der Feder (34; 35) in Eingriff mit einer Nockenfläche (42, 44; 43, 45) des Einstellringes (6) steht.

7. Elektrowerkzeug nach Anspruch 6, dadurch gekennzeichnet, daß die Blattfeder (34; 35) in der Eingriffsstellung der Rutschkupplung in den Bereichen benachbart zum Eingriffsbereich mit dem Kopplungselement (32; 33) am Gehäuseelement (1'; 2') anliegt.

**Revendications**

1. Accouplement à glissement avec couple de seuil réglable, dans lequel deux éléments (1', 2'; 21), qui sont mobiles l'un par rapport à l'autre, sont sollicités par une pression élastique variable pour le réglage du couple de seuil au moyen d'une bague de réglage (6) pouvant tourner autour de l'axe de rotation dedits éléments (1', 2'; 21), lesdits éléments (1', 2'; 21) étant en prise avec un organe coupleur (32, 33) reliant lesdits éléments d'une manière non tournante, ledit organe coupleur étant déplaçable pour être mis hors de prise avec l'un (21) desdits éléments dans une direction radiale par rapport audit axe de rotation et en opposition à ladite pression élastique lors de l'atteinte dudit couple de seuil, caractérisé en ce que ladite bague de réglage (6) entoure lesdits éléments (1', 2'; 21) dans la zone dudit organe coupleur (32, 33) et est pourvue d'au moins une surface formant came intérieure (42, 43, 44, 45) s'étendant dans une direction circonférentielle et étant appliquée contre le ressort (34, 35) produisant ladite pression élastique pour ledit organe coupleur (32, 33), la distance radiale entre ladite surface de came et ledit axe de rotation variant dans une direction circonférentielle.

2. Accouplement à glissement selon la revendication 1, caractérisé en ce qu'il est prévu deux organes coupleurs (32; 33) placés en opposition, chacun étant appliqué contre un ressort (34; 35).

3. Accouplement à glissement selon une des revendications 1 ou 2, caractérisé en ce que le ressort (34; 35) est une lame élastique comportant une zone centrale appliquée contre l'organe coupleur correspondant (32; 33) ainsi que des extrémités recourbées (36, 38; 37, 39) et en ce que chaque zone de transition vers les extrémités recourbées (36, 38; 37, 39) des ressorts (34; 35) est appliquée contre une surface de came (42, 44; 43, 45) de ladite bague de réglage (6).

4. Outil à moteur électrique comportant un carter (1, 2) pour un moteur électrique et un mécanisme de transmission, accouplé à l'arbre d'induit (10) dudit moteur électrique, dans lequel ledit mécanisme de transmission est accouplé à un support d'outil (25) qui comprend un accouplement à glissement comportant deux éléments (1', 2'; 21) déplaçables l'un par rapport à l'autre et accouplés par l'intermédiaire d'un organe coupleur (32, 33) soumis à une pression élastique, et où un desdits éléments est une roue dentée creuse (21) d'un train planétaire dont le pignon central (19) est entraîné par ledit moteur électrique et est situé excentriquement sur un élément (40) d'entraînement du support d'outil (25), caractérisé en ce que l'autre élément est une partie (1', 2') dudit carter, en ce que ledit organe coupleur (32, 33) est en prise avec les deux éléments (1', 2'; 21), en ce que cet organe coupleur vient hors de prise avec l'un (21) desdits éléments par déplacement dans une direction radiale par rapport à l'axe de rotation et en opposition à ladite pression élastique lors de l'atteinte d'un couple de seuil, en ce que ladite roue dentée creuse (21) et ledit élément de carter (1', 2') accouplés ensemble sont entourés par une bague de réglage (6) pouvant tourner autour de l'axe central de ladite roue dentée creuse (21), et en ce que ladite bague de réglage (6) comprend au moins une surface formant came intérieure (42, 43, 44, 45) s'étendant dans une direction circonférentielle, ladite surface de came étant appliquée contre le ressort (34, 35) produisant la pression élastique à laquelle est soumis ledit organe coupleur (32, 33), la distance radiale entre ladite surface de came et ledit axe de rotation variant dans une direction circonférentielle.

5. Outil à moteur électrique selon la revendication 4, caractérisé en ce qu'il est prévu des organes coupleurs (32; 33) opposés, chaque élément coupleur coopérant avec un ressort (34; 35).

6. Outil à moteur électrique selon l'une des revendications 4 à 5, caractérisé en ce que ledit ressort, est un ressort à lame (34; 35) dont la partie centrale est supporté par l'élément coupleur correspondant (32; 33), et présentant des extrémités courbes (36, 38; 37, 39), et en ce que chaque zone de transition vers les extrémités courbes (36, 38; 37, 39) du ressort (34; 35) est supportée par des surfaces formant cames (42, 44; 43, 45) de ladite bague de réglage (6).

7. Outil à moteur électrique selon la revendication 6, caractérisé en ce que ledit ressort à lame (34; 35) repousse ladite partie (1'; 2') du carter dans les zones adjacentes à la zone d'engagement sur ledit élément coupleur (32; 33) quand l'accouplement à glissement est en position de fonctionnement.

Fig. 1

ABCDEG

Fig. 2

Fig. 3

Fig. 4